# EUROPEAN PATENT SPECIFICATION

(11) **EP 1 702 449 B1**
(45) Date of publication and mention of the grant of the patent: **20.02.2019**
(21) Application number: 04804402.8
(22) Date of filing: 24.12.2004
(51) Int. Cl.: H04L 29/06, G06F 21/56, G06F 21/57

(54) **METHOD FOR IDENTIFYING THE CONTENT OF FILES IN A NETWORK**
VERFAHREN ZUM IDENTIFIZIEREN DES INHALTS VON DATEIEN IN EINEM NETZWERK
PROCEDE D'IDENTIFICATION DE CONTENU DE FICHIERS DANS UN RESEAU INFORMATIQUE

(30) Priority: 24.12.2003 US 532962 P; 24.12.2003 EP 03447310
(43) Date of publication of application: 20.09.2006
(73) Proprietor: Veritas Software Corporation, Mountain View, California 94043 (US)
(72) Inventor: DE SPIEGELEER, Kristof, B-8301 Knokke-Heist (BE)
(74) Representative: D Young & Co LLP
(86) International application number: PCT/EP2004/014817
(87) International publication number: WO 2005/064884

(56) References cited:
- EP-A- 1 111 507
- EP-A- 1 280 040
- US-A1- 2002 129 277
- US-A1- 2003 120 953
- US-B1- 6 195 587

## Description

### Technical field of the invention

The invention relates to a method and system to control the content of computer files, e.g. containing text or graphical data and a method for updating such a content identifying system. More specifically, a method and system is described for checking and managing the security status and the content of computer files on a local computing device in a network environment, and for updating such a checking and managing system.

### Background of the invention

In today's world, computers are widely spread. Very often, especially in business environment, they are interconnected in small or larger networks. As software and data often are an important part of the investment goods of both private persons and firms, it is important to protect single computing devices and complete networks and their workstations against attacks from viruses, trojan horses, worms and malicious software. Another problem is related to the amount of files containing undesirable content such as explicit adult content. These files are often received on local computing devices uninvited and unwanted.

To solve the security problems associated with viruses, virus protection systems, also called virus checkers, have been developed. Some examples of conventional virus checkers are Norton AntiVirus, McAfee VirusScan, PC-cillin, Kaspersky Anti-Virus. Most of these conventional virus protection software packages can be configured so that they are continuously running in the background of the computing device and providing continuous protection. These virus protection systems compare codes of new or amended software with fingerprints (e.g. parts of code introduced in files by the viruses) of well known viruses. Other virus protection systems compare codes of all data available on the computing device. This leads to the use of a significant amount of central processing unit (CPU) time, which limits the capacity of the computing device for performing other tasks. Furthermore, the working principle of these virus checkers makes these software packages work rather reactive than proactive, as the fingerprint of the virus needs to be known in order for a virus scanning program to recognise it. This implies that the database of fingerprints needs to be updated very regularly in order to be secured against relatively new viruses. Consequently, the secure state of the computer is not only depending on external factors like the accurateness with which fingerprints of new viruses are made available by the suppliers of virus protection software packages, but also on the sense of duty of the user regarding performing updates regularly. If updates are provided centrally from a server automatically, then network capacity is reduced as these virus updates must be sent to each workstation.

In a network environment, the problem of updating such a database of fingerprints becomes significantly more important, as it implies that the responsibility is put to all users, who all have to update their virus checker database. Alternatively, the virus scanning could be performed by a central server, thus limiting the updating for new fingerprints to the central server. Nevertheless this implies that a large amount of data needs to be transferred over the network on a regular basis thereby utilising large amounts of expensive network bandwidth and possibly (depending on the number of clients for the server) overloading the network or server capacity for other activities.

In order to limit the amount of CPU time used, additional techniques have been developed to speed up the virus scanning process. These very often include hashing of the content of files. Hashing is one example of application of a "one-way-function". A one-way-function is an algorithm which when applied in one direction makes the reverse direction almost impossible to perform. A one-way-function generates a value such as a hash value by a calculation on the content of a file and can uniquely fingerprint this file if the one-way-function is complex enough to avoid duplicate values from different files. The uniqueness of a hashing function depends on the type of hashing function that is used, i.e. the size of the digest that is formed and the quality of the function. Good hashing functions have the fewest collisions in a table, i.e. the chance of providing the same hash value for different files is the smallest. As mentioned, this is also determined by the size of the digest, i.e. hash value, that is calculated. If e.g. a 128-bit digest is used, the number of possible different values that can be obtained is 2¹²⁸.

It is known to use hashing for virus checking, possibly in a network environment. Typically, a hash of an application selected to run on a local computer is calculated, a stored hash from a database on a secured computer is retrieved on the local computer, whereby the secured computer can be a secured part of the local computer or a network server, and both values are compared. If there is a match, the application is executed, if there is no match, a security action is performed. This security action comprises loading a virus scanner on the local computer. It may also comprise alerting the network administrator. Furthermore it is also known to use this for differentiating accessibility to software from different workstations and as a way of checking whether software is licensed.

It is also known to use hashing in a method of identifying rogue software on a computer system or device. The method typically is applicable in a network environment. A hash value of a software application to be executed is calculated, this hash value is transferred to a server and compared with previously stored values. One of the essential features is that the method uses a database on a server, the server being a server with a large number of clients. The database on the server thereby is built up by adding information by different clients so that most software applications and their corresponding fingerprints are already stored in the database. The database is built up by checking software applications on authenticity with the owners of the application. If this is not possible, the system is also able to give a heuristic result, evaluating the occurrence of this application on local computers from other clients.

Methods for sending an electronic file by electronic mail, i.e. e-mail, including a file content and message content identifier are known. Depending on the message content identification, the message is delivered to a customer or not. The method may be used to organise e-mail delivery, but it has the disadvantage of being focussed on e-mail delivery and it does not allow to secure all files in a network.

Monitoring of electronic mail messages, to protect a computer system for protection against virus attacks and unsolicited commercial e-mail (UCE) is also known. Such a system is preferably installed on a mail server or an Internet Service Provider and checks specific parts of e-mails by calculating a digest and comparing it with stored digest values of e-mails previously received. In this way it is determined whether the e-mail has an approved digest or whether the e-mail is UCE or contains a e-mail worm. The system has the disadvantage that it is focussed on e-mail viruses and SPAM and that it does not allow to check all data files or executable files which are possibly infected, e.g. by files copied from external memory storage means like floppy disks or CD-ROMs or by e.g. Trojan horses.

Controlling the execution of software on different workstations according to certain policy rules by a network server is known, whereby an improved computer security system is obtained, by classifying software. It is suggested that this classification can be based on several forms of data one of which is e.g. the hash values of software data. This typically is performed by the calculation of hash values of a program if it is selected for loading and execution, and comparison of the hash value with a trusted value to determine the rule of execution. The classification also may be based on a hash of the content, a digital signature, the file system or network path or the URL zone..

The above mentioned methods and systems describe the use of hashing functions to check whether software applications are authentic or to regulate the execution of software applications. Nevertheless the problem of virus scanning all new files in a network using a conventional virus scanner whereby the necessity of updating the database of fingerprints of a conventional virus scanner on every local computer is limited is not discussed. One of the weaknesses of virus checking systems and data monitoring systems is that they often only can provide protection against viruses or malicious software as soon as the viruses or malicious software has been discovered, a fingerprint is known and the local databases in the network or on the local computing devices of the network have been updated. The latter implies that between the first spreading of the virus or malicious software and the time virus checking systems or data monitoring systems are able to detect and act against it a significant period of time may be present. Typically, when important virus checking systems updates or upgrades or data monitoring systems updates or upgrades are performed, at present, the full system, e.g. network therefore is rechecked which is time and computing power consuming or the system is not rechecked at all, leaving possible infections or malicious software in the system.

EP 1 280 040 A relates to a centrally managed virus scanning system. According to the document, a malware detecting system is described in which a client computer sends a file access clearance request to an assessment computer to determine whether or not access is permitted to that file. In this way, the different client computers on a network may share their scan results and centralised control may be provided over access permissions to individual files or groups of files.

### Summary of the invention

The present invention is defined by the appended independent claims.

Particular aspects and embodiments are set out in the dependent claims.

It is an object of the present invention to provide a method for updating or upgrading a content identifying means. Advantages of the present teachings include one or more of:
a) Providing a high degree of reliability while limiting the necessity of updating the information needed by a content identifier on every local computing device.
b) Having a high efficiency and providing a high degree of security in a network system.

It is a further advantage of the present teachings that, if the taught approach is used as a virus checker, the security level is further increased as the database of fingerprints of a conventional virus scanner does not have to be updated on every local computing device.

It is a further specific advantage of the present teachings that the content of a file new to a network is only identified once for the whole network.

It is furthermore a specific advantage of the present teachings that the total processor (CPU) processing time in the network and the amount of network traffic is reduced.

It is a specific advantage of the present invention that, upon upgrading or updating the virus identification means, malicious software identification means or content identification means, the updated or upgraded version is used for pro-active searching for "contaminated" content in an efficient way. This allows to provide network safety, even for data generated between the creation of the "contamination", i.e. the virus, the malicious software or the infected or unallowable content, and the time the "contamination" can be detected by the identification means. As upon detection of a contaminated file, similar files easily can be identified and treated similarly based on available data in the metabase, cleaning of the network can be done efficiently, with reduced CPU and network time.

At least one of the above described objects and at least one of the advantages are obtained with a method and system of content identification in a network according to the present teachings.

The method for identifying the content of a data file in a network environment is used for a network having at least one local computing device linked to a remaining part of the network environment including a central infrastructure. The method and system comprises calculating a reference value for a new file on one of said at least one local computing devices using a one-way-function, transmitting said calculated reference value to said central infrastructure, comparing said calculated reference value with reference values previously stored within the remaining part of the network environment.

The method further comprises,
after comparing, deciding that the content of the new file is already identified if a match between said calculated reference value and a previously stored reference value is found and retrieving the corresponding content attributes; or deciding that the content of the new file is not yet identified if no match between said calculated reference value and any of the previously stored reference values is found, followed by sharing the new file on the local computing device to said central infrastructure and said central infrastructure identifying the content of said new file by remotely identifying the content over the network environment, determining content attributes corresponding with the content of the new file and storing a copy of said content attributes,
after deciding, triggering an action on said local computing device in accordance with said content attributes.

In the method for identifying the content of a data file in a network environment, the reference value may be a hash value. The reference values previously stored may be stored within the central infrastructure. In the method and system for identifying the content of a data file in a network environment, identifying the content of the new file may comprise scanning the new file for viruses using an anti-virus checker means on a central infrastructure.

The method may furthermore comprise transferring the new file from the local computing device to the central infrastructure before said identifying the content of said new file is performed. Furthermore it may comprise storing a copy of the new file on the central infrastructure. Storing a copy of the new file on the central infrastructure may be performed by transferring a copy from the local computing device to the central infrastructure. An address of where the file is stored may be stored together with the hash value, as to be able to quickly track copies of the files stored on the central infrastructure.

In the method of the present teachings, triggering an action on the local computing device in accordance with said content attributes may comprise replacement of the new file on the local computing device with a copy of a previous version of said new file. Furthermore, triggering an action on the local computing device in accordance with said content attributes may also comprise replacement of the new file on the local computing device with another version of said new file restored from the remaining part of the network environment.

The method of the present teachings furthermore may comprise sharing the new file on the local computing device to the central infrastructure before said identifying the content of said new file is performed and whereby said identifying the content of said new file is performed by remotely identifying the content over the network environment. The method may comprise checking the functioning of the local agent on the local computing device.

Furthermore, triggering an action on the local computing device may be performed after transmitting the content attributes corresponding to the new file to the local computing device.

In the method for identifying the content of a data file in a network environment, identifying the content of the new file may comprise one or more of the group of scanning for adult content, scanning for Self Promotional Advertising Messages or Unsolicited Commercial E-mail (UCE) and scanning for copyrighted information. Scanning may be performed with scanning means on said central infrastructure. The method may further relate to a method and system for providing a content firewall, whereby one local computing device is connected to the external network, which may e.g. be the internet, and the one local computing device is also connected to the network environment formed by the remaining local computing devices. The one local computing device thus links the network environment with an external network and is the only computing device that is directly connected to sources external from the network environment. The local computing device thus acts as a content firewall as to protect the network environment from attacks originating from places in the external network. The local computing device may act as a content firewall working in a promiscuous way, i.e. whereby the local computing device acts as a content firewall that sees all traffic passing by, executes the hashing and comparing functions and contacts the agents to enforce a policy.

The method may be specifically related to a method for checking the security status of a network and its components. In this embodiment, a method for determining the security status of a data file in a network environment is used in a network having at least one local computing device linked to a remaining part of the network environment including a central infrastructure. The method comprises calculating a reference value for a new file on one of the at least one local computing devices using a one-way-function, transmitting said calculated reference value to said central infrastructure, comparing said calculated reference value with reference values previously stored within the remaining part of the network environment and after comparing, deciding that the security status of the file has already been checked if a match between the calculated reference value and a previously stored reference value is found and retrieving the corresponding security status; or deciding that the security status of the new file is not yet identified if no match between said calculated reference value and any of the previously stored reference values is found, followed by said central infrastructure checking the security status of the new file and determining the security status corresponding with the new file and storing a copy of the security status, followed by
after deciding, triggering an action on said local computing device in accordance with the security status of the new file. This action may be e.g. making the file inaccessible for the user of the local computing device and for other users in the network or restoring the infected file.

The methods described above may be triggered by an action performed on the local agent. The triggering by an action performed on the local agent may be e.g. running an application or opening a file.

The present invention relates to a method for altering a system for identifying content of a file in a network according to claim 1.

Requesting a file that corresponds with said reference value from said network environment may be followed by sending said file to the means for identifying the content. Alternatively, the file also may be shared and identifying the content may be performed over the network. The sharing may be performed under a secured connection and may be limited to between the local computing device and the central infrastructure. Altering of a system for identifying the content of a file in a network environment may be triggered by the introduction of a new one-way function to calculate reference values or may be also triggered by the updating of the means for identifying the content of the files. In the method, scanning the remaining part of the network environment for reference values calculated with a one-way function may comprise scanning the remaining part of the network environment for reference values, calculated with a one-way function, said reference values being generated after a predetermined date. Said predetermined date may be related to the creation date of viruses or malicious software for which said altering is performed. Said sending the content attributes to every local computing device containing the file, may comprise identifying every local computing device containing the file using a stored database and sending the content attributes to said identified local computing devices. The method may be used to scan only part of the hashing keys in the remaining part of the network environment, e.g. hashing keys of files of which the content is identified after a certain date, as to minimise the actions to be performed. The date of the previous content identification may be retrieved from the content attributes. Sending the content attributes to said identified local computing devices may comprise, for each of said identified local computing devices not connected to said network, creating an entry in a waiting list and sending the content attributes to said identified local computing devices in agreement with said entry on said waiting list when the local computing devices are reconnected to the network. Requesting a file that corresponds with said reference value from said network environment may comprise, if no local computing device having said file that corresponds with said reference value is connected to the network, creating an entry in a waiting list and requesting a file that corresponds with said reference value from said local computing device in agreement with said entry when the local computing device is reconnected to said network. Said method may furthermore comprise identifying whether the content attributes correspond with unwanted content and, if so, identifying the local computing device that first introduced said unwanted content in the network based on data stored in said database.

The reference values may be hashing values. The means for identifying the content may be an anti-virus checker means, a means for scanning for adult content, a means for scanning for Self Promotional Advertising Messages or a means for scanning for copyrighted information. Triggering an action on the local computing device in accordance with said content attributes may comprise replacement of the file on the local computing device with another version of the file restored from the remaining part of the network environment or may comprise replacement of a file with a copy of a previous version of the file or may comprise putting the file in quarantine or removing the file.

The present teachings are also related to a computer program product for executing any of the above described methods, when executed on a network. The present teachings furthermore relate to a system for identifying the content of a file in a network environment, said network environment comprising at least one local computing device linked to a remaining part the network environment which includes a central infrastructure and, said remaining part including a stored database, whereby the system comprises means for calculating a reference value for a new file on said local computing device using a one-way-function, means for transmitting said calculated reference value to said central infrastructure and means for comparing said calculated reference value with previously stored reference values from the database. The system furthermore comprises means for deciding whether the content of the new file is already identified based on comparison of said calculated reference value and reference values previously stored within the remaining part, means located on the central infrastructure, for identifying the content of the new file and as to assign content attributes if the new file has not been identified yet and means for storing said content attributes within the remaining part, and means for triggering an action on said local computing device in accordance with content attributes for said new file.

In the system according to the present teachings, the means for identifying the content of a file may comprise an anti-virus checker means on said central infrastructure. Furthermore, means for storing a copy of the new file within the remaining part. The means for identifying the content of a file may comprise one or more of the group of means for scanning for adult content, scanning for Self Promotional Advertising Messages and scanning for copyrighted information.

The present teachings may also relate to a machine readable data storage device, storing the computer program product for executing any of the above described methods, when executed on a network. Furthermore, the invention may also relate to the transmission of the computer program product for executing any of the above described methods.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of methods of virus scanning and content identification of data files, the present concepts are believed to represent substantial new and novel improvements, including departures from prior practices, resulting in the provision of more efficient, stable and reliable methods of this nature.

These and other characteristics, features and advantages of the present teachings will become apparent from the following detailed description, taken in conjunction with the accompanying drawings, which illustrate, by way of example, the principles of the invention. This description is given for the sake of example only, without limiting the scope . The reference figures quoted below refer to the attached drawings.

### Brief description of the drawings

Fig. 1 is a schematic representation of a computer network
Fig. 2 is a schematic representation of a central infrastructure and its basic software components
Fig. 3 is a schematic representation of a local agent-driven content identification process.
Fig. 4 is a schematic representation of a metabase-driven content identification process.
Fig. 5 is a schematic representation of a computer network to which the content firewall system and method can be applied.

In the different figures, the same reference figures refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In this description, the terms "file", "program", "computer file", "computer program", "data file" and "data" are used interchangeably, and any one use may imply the other terms, according to the context used. The terms "hash" and "hashing" will be used as examples of the application of one-way-functions but the present invention is not limited to a particular form of one-way-function.

The term "computing device" should be interpreted widely to include any device capable of carrying out computations and/or executing algorithms. A computing device may be any of a laptop, workstation, personal computer, PDA, smart phone, router, network printer or any other device which has a processor and can be connected to a network such as e.g. faxing devices or copiers or any dedicated electronic device such as a so-called "hardware firewall" or a modem.

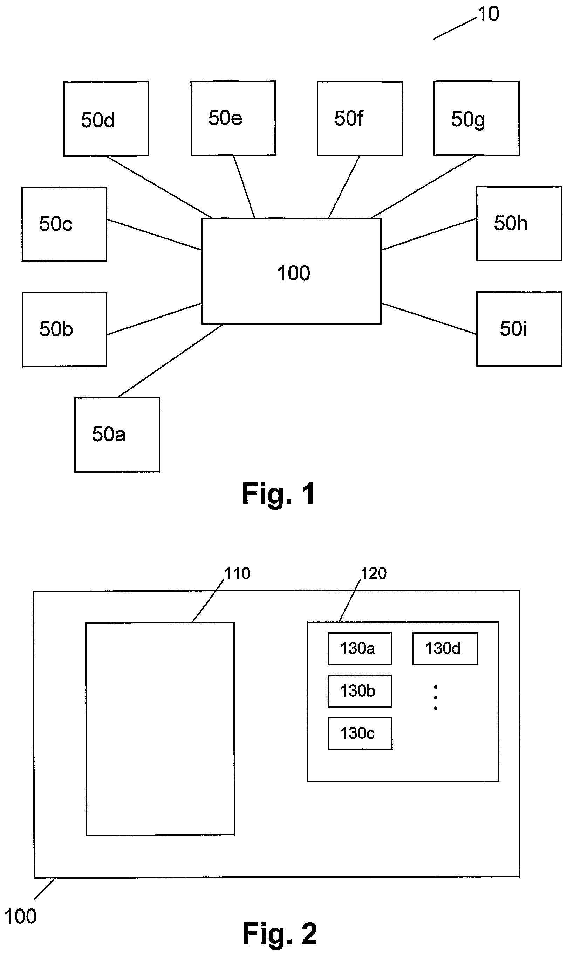

The method and system to secure and control a network by identifying the content of each new file in the network can be used on any type of network. This may be a private network which may be a virtual private network, a local area network (LAN) or a wide area network (WAN). This may also be within a part of a public wide area network such as the internet. If a part of a public wide area network is used, this may be performed by remotely providing the method and system for identifying the content of each file by a service provider using an ASP or XSP business model, wherein the central infrastructure is provided to a paying client operating a local computing device. An exemplary network 10 is shown in figure 1, showing several local computing devices 50a, 50b, ..., 50i and a central infrastructure 100, also called a server. The number of local computing devices 50 connected to the network 10 is not limiting for the method of securing and controlling a network 10 according to the current invention. In business environment this number of local computing devices 50 typically ranges from a few to a few thousands. The method and system for identifying the content of each new file present in the network 10 may be used with many different operating systems such as Microsoft DOS, Apple Macintosh OS, OS/2, Unix, DataCenter-Technologies' Operating Systems, ...

In order to provide a quick method of securing and determining content identification of files, the method and system according to the present invention will determine hash values of new files present on the local computing devices 50, compare them with previously stored hash values and file information on a central server and determine the content of files new to the network 10 using a content identifying engine on the central infrastructure 100. The content attributes describing the content of a new file are then send to the local computing device 50 where an appropriate action is performed. It is also possible that the content attributes are not sent to the local computing device 50 but that the appropriate action is triggered from the central infrastructure 100. New files typically are files wherein new content has been generated on a local computing device 50 or when an external file has been received. The wording "file" may refer to data as well as to software applications, also called software.

Identifying the content of a file or data can be done by sending the file or data towards a central infrastructure 100 where it is checked or it can be done by sharing the file or data locally, such that the central infrastructure 100 remotely can identify the content of the file or data. The sharing may e.g. be done in a secured environment. The sharing may be limited to between the local computing device 50 carrying the file or the data and the central infrastructure 100.

The central infrastructure 100 contains a database, also called metabase 110, which contains a record for every hash value that is calculated for a file that already exists on one of the local computing devices 50. Besides the hash value, this record also contains a number of other fields. In these fields, file source information is stored. The file source information corresponding with a specific hash value includes the file name, a list of local computing devices 50 where the files that correspond to this hash value are residing on, including the path to the file on the file system of the local computing devices 50 and the date of last modification. An example of file source information for a specific file is given in Table 1.

**Table 1**

| | |
|---|---|
| Filename | Myexampleword.doc |
| Path | c:\data\ |
| Assetname | Pcmarketing001 |
| Mod Date | 23/4/2002 |

In a further field, a list of content attributes that identifies the type of content that is enclosed by the file is stored. The content attributes can e.g. refer to a file that contains a virus, a file that is a copyrighted MP3 audio file, a file that is a copyrighted video file, a file that is a picture, a file that is a picture that might contain adult content, a file that is a Self Promotional Advertising Message (SPAM), a file that is a HOAX, a file containing explicit lyrics or a file containing pieces of executable code. This list is not limiting.

The central infrastructure 100 furthermore contains a content identification engine 120. This can be a software application 130 or a set of software applications 130a, 130b, 130c, 130d, ... that use the content of a file to determine which type of content the file contains. These software applications may be various :
- a virus scanner: this is a piece of software that scans the content of the presented file and compares it with a database of known fingerprints of viruses. This can be any conventional virus scanning software like e.g. Norton anti-virus by Symantec Corporation, McAfee by Network Associates Technologies Inc., PC-cillin by Trend Micro, Kapersky Anti-Virus by Kaspersky Lab, F-secure Anti-Virus by F-Secure Corporation, ...
- an adult content in pictures scanner : this is a piece of software that scans the content of the presented file for the presence of shading, colors, textures that might represent adult content. Scanning pictures for adult content is already known. Adult content can e.g. be determined by the amount of nude that is shown. Skin tones have hue-saturation values that are in a specific range. Therefore, if an image is scanned, it is possible to determine the amount of pixels having a skin tone character and to compare it with the total number of pixels. The ratio of skin tone pixels to the total number of pixels allows to determine a ratio of possible adult content in an image. Thresholds often are introduced so that images can be classified according to their possible adult content. In similar way, video images can be categorised, whereby the video is split into its different frames and wherein the images are categorised according to the above method.

- A scanner for internet content ratings : A piece of software that scans objects for adult content based on the PICS, i.e. the Platform for Internet Content Selection, label system. On voluntary basis, internet content providers can provide internet objects with a PICS rating determining the adult content in the internet object. This PICS rating is stored in the meta data of the object. This data normally is not visible to the viewer of an internet object. The rating systems is well known and an example of a scanner for internet content ratings is provided in the Netscape web browser for scanning the content of web pages.
- A scanner for scanning an object for explicit lyrics which may indicate adult content. This is known for both text files and audio files. Audio files are first transferred to text files. Subsequently, the text files are scanned and compared with databases which contain explicit lyrics.
- a SPAM-engine: A piece of software that scans the content of e-mail messages for the presence of alleged SPAM. Algorithms to recognize SPAM area already known. These are typically based on decomposing the text in an electronic mail message, associating statistics with the text using a statistical analyzer and coupling a neural network engine to the statistical analyzer to recognize unwanted messages based on statistical indicators.
Other examples of software applications that could be used in the content identification engine 120 are e.g. engines that scan for copyrighted content and that compares the content of the file to a database of copyrighted information, etc. In some adoptions, a human operator can pursue the role of content identification engine 120, where he manually tags a file with a content identification attribute. When the content identification engine 120 is activated, it will take a file from the local agent as input and produce a set of attributes that represent the detected content.

The content identification engine 120 also may allow to check whether the data on the local computing devices 50 comply with the rules for allowable data on the network or on these local computing devices 50. These rules may be different for different local computing devices 50.

The content identification engine 120 will thus be constructed as a piece of software aggregating the functionality of a set of third party engines.

In a further embodiment of the invention, a system and method in accordance with the above embodiment is described whereby the record corresponding with a specific hash value stored in the metabase 110 also comprises a field wherein the location of the file on the central infrastructure 100 corresponding with the hash value is stored. In this embodiment, a copy of all different files present on the local computing devices 50 in the network 10 may be stored on the central infrastructure 100. So, the central infrastructure 100 of this embodiment may also comprise a large amount of storing space. This preferably is a secured part of the central infrastructure 100, not directly connected to the network 10 so that these identical copies of the files present on the local computing devices 50 can be used in case the files on the local computing devices 50 are corrupted e.g. by a virus.

The hash value of the files are calculated using a hashing function. A hashing function typically is a one way function, i.e. given the digest, it is at least computationaly prohibitive to reconstruct the original data. Different types of hashing functions could be used : MD5, SHA-1 or ripemd all available from RSA Data Security Inc., haval which is designed at the University of Wollongong, snefru which is a Xerox secure hash function, etc.. The hashing functions most often used are MD5 and SHA-1. The MD5 algorithm takes as input a message of arbitrary length and produces as output a 128-bit "fingerprint" or "message digest" of the input. It is conjectured that it is computationally infeasible to produce two messages having the same message digest, or to produce any message having a given pre-specified target message digest. The MD5 algorithm is intended for digital signature applications, where a large file must be 'compressed' in a secure manner before being encrypted with a private (secret) key under a public-key cryptosystem. The MD5 algorithm is designed to be quite fast on 32-bit machines. In addition, the MD5 algorithm does not require any large substitution tables; the algorithm can be coded quite compactly. An alternative hashing function SHA-1, i.e. Secure Hashing Algorithm - 1, is a hashing algorithm generating a 160-bit hash. Newer versions of this algorithm also provide bit lengths of 256 and 512.

In the above mentioned embodiments describing a method and system to secure and/or control the network 10, a local agent is installed on the local computing device 50. The local agent is a piece of software that is running on a local computing device 50 and that performs certain algorithms and procedures. The local agent on the local computing device 50 is triggered typically in situations where new content is being generated on local computing devices 50. In order to avoid unnecessary hash value calculations and data transfer, a policy is setup to determine which actions will trigger the local agent and which actions do not trigger it. If e.g. a text document is being created, it is not necessary to check the file every time the document is saved. The policy for such a type of documents would preferably be that the document is checked e.g. if the file is both saved and closed. Some examples of actions which could trigger the local agent and thus start the content identification process are opening or receiving e-mail messages, opening or receiving e-mail attachments, running executable files, running files with .dll or .pif extension, ... Applying this policy thus allows to prevent from continuously checking and scanning of documents leading to a limitation of the number of unnecessary hash calculations and content identification operations and thus limiting the unnecessary use of CPU time and load on the network traffic. The method and system of content identification is not limited due to the type of application in which the file is made.

The content identification process can be either triggered by the local agent on the local computing device 50 or it can be triggered by the central infrastructure 100. The latter process typically occurs in situations wherein new algorithms or tools are being used for content identification. Such new algorithms or tools can either be optimised algorithms and tools or previously uninstalled tools. Some examples of these tools, without restricting to these functions, could be virus checking, checking whether a file is a copyrighted MP3 Audio File, checking whether a file is a copyrighted Video File, checking whether a file is a picture that might contain adult content, checking whether a file is tagged as being SPAM or HOAX, checking whether a file contains explicit lyrics or checking whether a file contains copyrighted pieces of executable code. Updating of these tools may influence the status of the files and thus may in principle influence the corresponding records in the metabase 110. Therefore, depending on the type of update of the content identification means 120, it may be interesting to update the corresponding records.

In a specific embodiment, the method relates to a virus checker for a network environment. The networks 10 on which this method can be applied are the same as those described for the previous embodiments. The local agent calculates the hash value of a new file on the local computing device 50. This new file may comprise new content generated on the local computing device 50 or an external file which is received on the local computing device 50. The hash value of the new file and the corresponding file information then is sent to a central infrastructure 100, also called server, where it is compared to previously stored hash values corresponding with files that are already present on the different local computing devices 50 of the network 10. This comparison allows to check whether the file is new or not in the entire network 10. Alternatively, the hash value may also be first compared with a local database of hash values and file information corresponding with the files present on that particular local computing device 50 and subsequently, if the file has been found not yet present on the local computing device 50, the hash value and the corresponding file information may be interchanged with the central infrastructure 100 so it can be checked whether the file is new or not in the entire network 10. Although transferring the file information and the hash value of every new file only corresponds with a very small fraction of the network traffic for a conventional central virus checker, this alternative could reduce the network traffic used for virus checking even further. If a hash value has been identified as new on the network 10, the metabase agent triggers the local agent to transfer the file corresponding with the new hash value from the local computing device 50 to the central infrastructure 100. The transferring of the file may be performed in a secured way, i.e. the file may be transferred such that it cannot be influenced by a virus present at a network connection or such that, it if contains a virus, this cannot be spread over the whole network 10. To obtain this, a known secure transmission route, a tunnel and/or known session ecryption/decryption techniques may be used. In an alternative embodiment, the file or data may be shared to the central infrastructure and the virus checking means may remotely check the file or data. A conventional virus checker, installed and updated on the central infrastructure 100 then checks the file for viruses. This can be any conventional virus checker like e.g. Norton anti-virus by Symantec Corporation, McAfee by Network Associates Technologies Inc., PC-cillin by Trend Micro, Kapersky Anti-Virus by Kaspersky Lab, F-secure Anti-Virus by F-Secure Corporation, ...

A specific advantage of the above described embodiments in the current invention is that the virus scanning software does not need to be updated on every local agent but that this is restricted to updating of the virus scanning software of the central infrastructure 100. In this way the security level of the network 10 is increased significantly as the security does not depend on the punctuality of the different users of the network 10 to update their virus scanning software. If the scanned file has no virus it will be marked in the metabase 110 as being a virus free file. If there is a virus found in a file the file will be marked as dangerous. A query will happen to the metabase 110 to find all files over the network 10 having the same corrupted hashing key. The result is a list of files with path, and assetname where the file is located. This information can be used to do actions to eliminate the danger of found viruses on all local computing devices 50, i.e. all workstations, from the complete network 10. In this way proactive virus scanning can be performed on other local computing devices 50, based on a virus detection on a first local computing device 50. Depending the policy defined for virus checking, the virus engine will inform an agent installed on the affected system to remove the file and if possible replace with either a recovered version delivered by the virus engine located on the central infrastructure 100, or a previous version of the file which didn't have the virus yet. The latter can be done easily by searching the metabase for a previous version of that file, or it can be performed by searching an uninfected version on another local computing device 50. If an uninfected version cannot be retrieved from either another local computing device 50 or the metabase residing on 100, the virus scanner should have a feature which allows it to save a new disinfected copy of the file on the central infrastructure 100. These advantages are also present for other content identifying packages.

In an alternative embodiment, if a file having a new hash value has been identified in the network 10, instead of transferring the file to the central infrastructure, the file may be automatically shared locally and a remote checker then may transfer a file-system which allows to check the file across the network 10 using the file sharing. The content tagging still is performed by the server. In order to improve security, the accessibility to the shared file is restricted to the server. Furthermore, a java applet could be transferred to the local agent to allow checking other files.

The previous embodiments are an improvement over a central virus checker which scans local computing devices 50 through the network 10. This is only possible if the local drives, e.g. C:\, D:\, ..., are shared. Besides the dangers of sharing with respect to security, the local user also easily can change the local sharing properties thereby preventing the remote checker from checking the files. This is at least partly avoided with the current invention as changing the network 10 sharing properties does not influence the operation of calculating the hash value of new files and sending it to the central infrastructure 100.

Another advantage is that it saves CPU time on the local computing device 50 as the CPU does not have to keep doing virus checking, it only has to calculate a one way function. It also saves network time : the administrating server does not have to update the virus checkers on the local computing devices 50 with virus updates, as a single central virus checker only is used and updated.

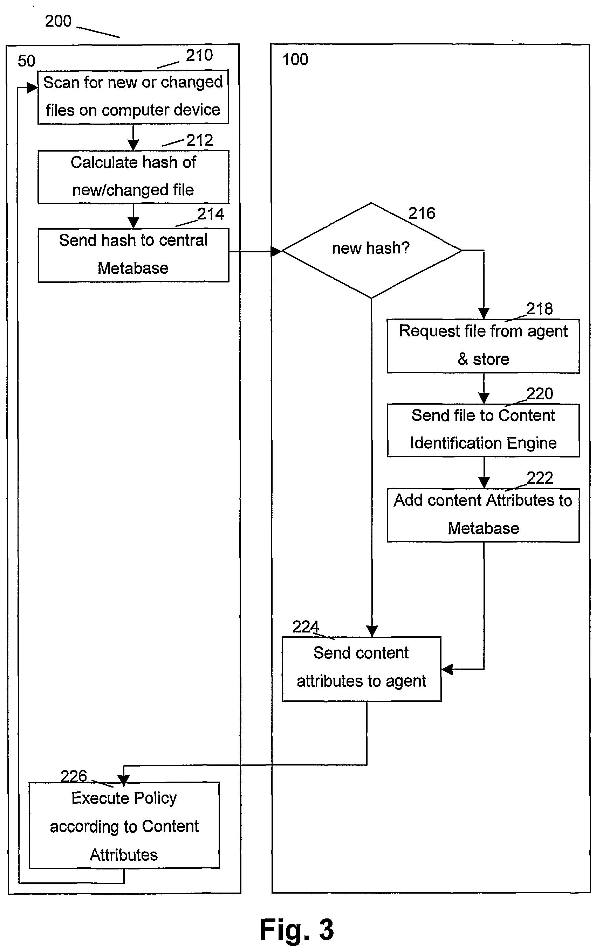

Fig. 3 shows a method 200 of the content identification process triggered by the local agent on the local computing device 50 according to the above mentioned embodiments. The different steps that occur during the process, both on a local computing device 50 and on the central infrastructure 100 are discussed.

The content identification process is based on continuously scanning for new data or applications on the local computing device 50 by the local agent. This scanning for data and applications is limited by the policy rule for determining when the local agent should be triggered, as described above. If a "new" file has been detected the method for securing and controlling the network 10 by content identification of new files is initiated. This is step 210. Method 200 then proceeds to step 212.

In step 212, a hash value of the "new" file is calculated using a hashing function like MD5 or SHA-1. This calculation is performed by using some CPU time of the local computing device. Nevertheless, the amount of CPU time used is drastically smaller than the CPU time that would be necessary if e.g. a conventional virus checker was used to check the file on the local computing device 50. Method 200 then proceeds to step 214.

In step 214, the hash value and the file source information is transferred from the local agent to the central infrastructure 100 of the network 10. If necessary, this transfer can be a secured transfer, whereby it is avoided that a virus which is positioned on a network connection changes both the file source information or the hashing key during transport of this data. Such a secured transmission can be made over a known secure transmission route, via a tunnel, or using known session encryption/decryption techniques.

In step 216, the hash value is compared with the data already present in the metabase 110. As in the metabase 110, the hash values and file source information of all old files - i.e. every file that has been present on the network 10 and that is not "new" as described above - present in the network 10 are stored, it is possible to check whether the file already is present in the network 10. Therefore, if the hash value has been identified as new, this implies that the file is "new" for the whole network 10. If the file is new, method 200 proceeds to step 218. If the hash value is not new, this means that somewhere on a local computing device 50 in the network 10, the file does already exist. In this case, there already exists content attributes describing the content of the file. Method 200 then proceeds to step 224.

In step 218 the metabase agent triggers the local agent to transfer the file corresponding with the new hash value from the local computing device 50 to the central infrastructure 100. The transferring of the file may be performed in a secured way, i.e. the file may be transferred such that it cannot be influenced by a virus present at a network connection or such that, it if contains a virus, this cannot be spread over the whole network 10. To obtain this a known secure transmission route, a tunnel and/or known session ecryption/decryption techniques may be used. Method 200 further proceeds to step 220.

In step 220 the file is loaded in the content identification engine 120 and the file is processed. For this processing CPU time of the central infrastructure 100 is used. The content identification engine 120 can comprise, as described above, a conventional virus checker, a means for checking picture information, a means for checking SPAM, etc. This can be a repetitive action where multiple content identification engines are called in turn. Method 200 then proceeds to step 222.

In step 222 content attributes, which identify the content of the file, are determined for the file. These content attributes are then stored in the metabase 110, thus allowing to identify the status of the file if, in future operations, the file is found 'new' on another local computing device 50. Method 200 then proceeds to step 224. Depending on the embodiment used, a following step may include the storing of the file on the central infrastructure 100 and adding the path to this file to the metabase 110. This step is not shown in figure 3.

In step 224 the content attributes are sent to the local agent. Based on this content attributes, the local agent performs an appropriate action in agreement with the policy rule set for these content attributes. This is performed in step 226. This can be e.g. deleting the file if it was infected, replacing the file with a previous version which was not infected, .... In a specific embodiment, the execution of appropriate actions based on the policy rules are triggered by the agent of the metabase 110, so that step 224 can be avoided.

The content policy is a policy that determines what should be done with a file depending on the content attributes determined by the content identification engine 120. The content policy can comprise actions such as deleting the file, deleting the file and replacing it with a previous version, copying the file onto another computing device while leaving a copy on the originating computing device, moving the file onto another computing device while deleting the original file on the originating computing device, logging the presence of the file, changing the attributes of the file like hiding it or making it read-only, making the file unreadable, making the file un-executable, etc. The content policy will be executed by the local agent, e.g. when the content attributes are received from the central infrastructure 100. The content policy for that agent will be downloaded to the local computing device 50 by the agent from a central policy infrastructure.

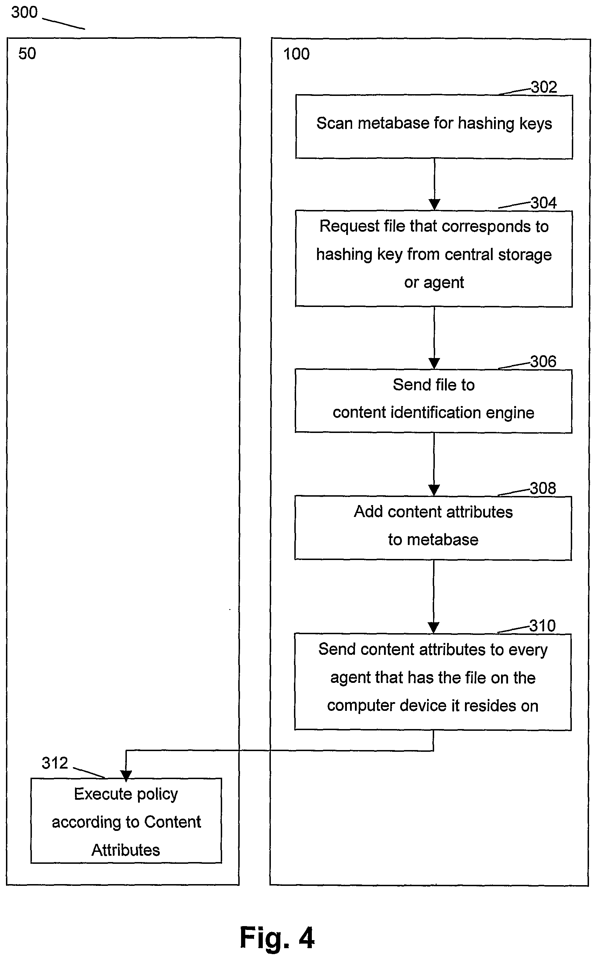

Fig. 4 shows a method 300 of the content identification process triggered by the content identification engine 120 according to the above mentioned embodiments . The different steps that occur during the process, both on a local computing device 50 and on the central infrastructure 100 are discussed.

This process typically is used in situations where new algorithms or tools are being used for content identification. Such new algorithms or tools can either be optimised algorithms and tools or previously uninstalled tools. As mentioned earlier this may be regulated by a policy : the triggering of the content identification process may be determined by the type of new algorithms and tools that are being used for content identification.

Method 300 is initiated by change of the content identification engine 120, e.g. by providing new algorithms or tools for the content identification engine 120. A typical example is the update of the fingerprints database used in a virus checker or content identification means once, after a virus or malicious data has been generated, the virus or malicious data has been identified and a fingerprint to be used in a virus checker or content identification means is generated. As there may be a significant amount of time between the generation of a virus and the moment a virus checker or content identification means can detect the virus or malicious data during which the network is not secured, it is advantageous to have a system that allows proactive checking in an efficient way, i.e. checking of the files generated in that time span. In conventional systems, typically the complete network needs to be rescanned, requiring a huge amount of CPU and network bandwidth, or the systems is left not secured.

In the first step 302 of method 300 upon triggering, the metabase 110 is scanned for hash values corresponding with hashing keys. Method 300 then proceeds to step 304.

In step 304, a file that corresponds with the hashing key is requested. This file can be either requested from the central storage on the central infrastructure 100 or it can be requested from a local computing device 50. The local computing device 50 then gives permission to the central infrastructure 100 to upload the corresponding file. The path to the file corresponding with the hash value is available from the record corresponding with each hash value. If the record stores different paths all corresponding with a copy of the corresponding file, the agent on the central infrastructure 100 retrieves one copy of the file, e.g. by scanning the paths listed in the record until a local computing device 50 has been found that is at that time connected to the network 10 and that allows uploading of the file. Method 300 then proceeds to step 306.

Once the file has been retrieved, the file is sent to the content identification engine 120. This is performed in step 306. The upgraded content identification engine 120 then scans the content of the file and produces content attributes corresponding with the file. Method 300 further proceeds to step 308.

In step 308, the content attributes are stored in the metabase 110, to allow in future security steps to immediately identify the content of the files. Method 300 further proceeds to step 310.

In step 310, the content attributes are sent to every local agent that resides on a local computing device 50 whereon the corresponding file is stored. The paths can be found in the record of the corresponding hashing key stored in the metabase 110. In this step, content attributes are send to every file for which a path is mentioned in the record of the corresponding hashing key. If local computing devices 50 are not connected to, i.e. disconnected from, the network at the time of checking, a waiting list may be created allowing to check the necessary files as soon as the computer is connected to the network. A waiting list may both be created in the step of providing content attributes to certain files as well as in the step of requesting a file to identify its content. This list may be created by the central infrastructure or downstream the network at a local distribution point. Disconnection of local computing devices 50 especially occurs frequently when the local computing devices 50 are portable computing devices, such as e.g. labtops. In this way security is also guaranteed for disconnected local computing devices 50 which can be part of the network. Method 300 proceeds to step 312.

In step 312, the local agent on the corresponding local computing devices 50 executes the policy according to the content attributes and the according to the local computing device 50.

One of the major advantages of the embodiments of the invention is that a file new to the entire network 10 only needs to be scanned once. If on another local computing device 50, an identical copy of this file is used, installed, opened or saved and closed, the file will be recognised by the central infrastructure 100 as being known to the network 10, in this way avoiding the need to re-check the content of the file. This especially is advantageous if the invention is used for networks 10 having a large number of local computing devices 50.

The methods of the present embodiments may also be implemented on a network having a central infrastructure 100, a number of distribution points, consisting of a computing device, and for each of said distribution points a number of local computing devices 50. In this way at least part of the processing steps, such as e.g. creating a waiting list or searching proactive may be performed by agents on the computing devices of the distribution points. The distribution points may correspond with physically separated regions in the network.

When operating, the method and system for identifying the content of new files optionally can comprise checking 'the heartbeat' of the local agent at regular times, i.e. it can be checked whether the local agent is still running on the local computing device 50. This can avoid that a user locally shuts down the agent, thus making the local computing device 50 vulnerable. If the local agent has been shut down, the network administrator can be warned. Furthermore a warning message could be send to the local computing device 50 thereby warning the user of the local computing device 50. The network administrator could also put the local computing device 50 in quarantine so that it can not damage other local computing devices 50 in the network 10. Furthermore, the central agent can also try to rerun the local agent.

In a similar way, the method and system for identifying the content of new files optionally can check at regular times whether the local computing device 50 is still connected to the network 10. If the local computing device 50 is not connected to the network 10 anymore, the local agent may further operate, storing hashing keys of new files in a waiting list to be checked once the network connection is restored. In the mean time, the corresponding files may be put in quarantine or depending on the type of file e.g. may be prevented from being executed.

The above described embodiments may be used as a content firewall for the different computing devices connected to the external network. For every incoming/outgoing file, incoming/outgoing message or incoming/outgoing data frame, the content firewall calculates the hash, checks whether this is new, checks whether it is tagged for specific content and enforces the policy associated with the specific content.

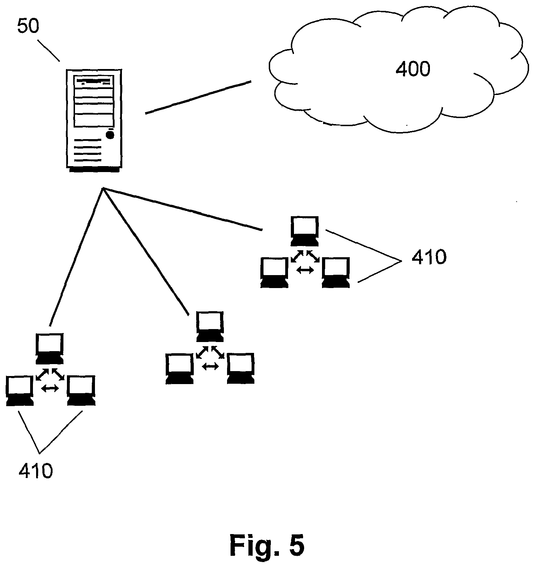

In a further embodiment, another configuration for using the present invention as a content firewall is described. A schematic overview of a computer network wherein this method and system may be used, is shown in Fig. 5. Only one reconfigurable firewall electronic device 50, such as a local computing device which may be in the form of a dedicated reconfigurable firewall electronic device, is directly connected to an external network 400 such as e.g. the internet, and the remaining local computing devices 410, are not directly connected to the external network 400, but grouped in a network environment and only connected to the external network 400 by their connection to the electronic reconfigurable firewall device.. The external network may be any possible network available. It is a goal of the content firewall as represented by the reconfigurable electronic firewall device 50 to protect the network environment comprising the remaining local computing devices 410 from attacks originating from places and/or devices in the external network. The reconfigurable electronic firewall device 50 50 either contains a local copy of the metabase or it can use a high speed secured network to a central infrastructure 100 which is part of the internal network. This allows for fast queries through the metabase. During operation, the reconfigurable electronic firewall device 50 functioning as a content firewall performs the following actions : the hash value of incoming files or incoming messages or incoming data frames are calculated. Subsequently, the calculated hash values are compared with the metabase, which is either stored locally or by using a high speed secured network, and it is determined whether the incoming file, incoming message or incoming data frame is new. Furthermore, it is checked whether this file, this message or this data frame is tagged for specific content. Depending on the specific content, a policy is enforced which is associated with the specific content. This policy may be to let it pass through to its final destination, to drop it, to log it, to put it in quarantine, etc. This system requires sufficient CPU power, in order not to slow down the network speed noticeably.

In the case where none of the local computing devices connected to the network is equipped with a removable device, i.e. allowing for non-scanned content to be opened or executed on that device, this is a very secure and managable setup.

In another embodiment of the invention, a similar configuration for use of the present invention as a content firewall in promiscuous mode is provided. The content firewall thereby sees all traffic passing by, executes the hashing and comparing functions and contacts the agents to enforce a policy. The advantage of this approach is that there is no single point of failure and no bottleneck anymore and furthermore that still no resources are used on the local computing devices for calculating hashes. Furthermore, no bandwidth is used for contacting the central metabase. The disadvantage is that local agents need to be installed on all computing devices of the internal network.

The methods and systems described in the different embodiments also may comprise steps respectively means for performing steps for identifying or reporting additional information about the presence of a virus or malicious data. Based on the information provided in the metabase 110, identification of the local computing device 50 where the virus or malicious data has entered the network can be obtained. This can be based e.g. on information about the path and the modification date or the generation date. Furthermore, based on the information provided in the metabase 110, such as the file type, further information about how the virus operates may be obtained. The metabase furthermore may allow to identify e.g. how the virus or malicious data has spread over the network. The information thus obtained may be stored and/or used to still further increase the security of the network. If the information is e.g. stored for a number of incidents that occur, an overall analysis, e.g. statistical analysis, could be made indicating weak points in the security of the network, i.e. indicating local computing devices 50 being vulnerable to virus or malicious data attacks. This could be performed automatically. Adjusted security measures may then be taken, such as e.g. performing regular full checking of that local computing device or providing only limited access to external sources, such as the internet, for that local computing device 50.

The information obtained in the metabase may be used for recovery purposes, as upon failure of a local computing device 50, all neccessary information such as e.g. path file may be obtained from the metabase. When a local computing device 50 or part cannot be connected anymore, at least part of the lost information can be recovered based on the information in the metabase, files stored on the central infrastructure and/or files stored elsewhere in the network.

In accordance with the above described embodiments, the present invention includes a computer program product which provides the functionality of any of the methods according to the present invention when executed on a computing device. Further, the present invention includes a data carrier such as a CD-ROM or a diskette which stores the computer product in a machine readable form and which executes at least one of the methods of the invention when executed on a computing device. Nowadays, such software is often offered on the Internet, hence the present invention includes transmitting the printing computer product according to the present invention over a local or wide area network.

## Claims

1. A method for altering a system for identifying the content of a file in a network environment, said network environment comprising means for calculating a one-way function, at least one local computing device (50) and a central infrastructure (100), said central infrastructure comprising means (120) for identifying content in a database (110), the method comprising
- altering said means for Identifying the content,
- scanning (302) the database for reference values calculated with a one-way function,
- for each of said reference values,
- requesting (304) a file that corresponds with said reference value from said network environment,
- identifying (306) the content of said file using said means for identifying content and determining content attributes corresponding with the content of the file and storing (308) a copy of said content attributes in the database,
- sending (310) the content attributes to each of the at least one computing device containing the file,
- after sending, triggering (312) an action to each of the at least one computing device containing the file in accordance with said content attributes;
wherein the database comprises a record for each reference value calculated with the one
way function for files stored in the at least one computing device.

2. A method according to claim 1, wherein said scanning (302) the database
for reference values calculated with a one-way function comprises scanning the database
for reference values, calculated with a one-way function, said reference values being generated after a predetermined date.

3. A method according to claim 1 or 2, wherein said method furthermore comprises, for each of said reference values, sending the file (306) to means for identifying the content.

4. A method according to claim 1 or 2, wherein said method furthermore comprises, for each of said reference values, sharing the file to the means for Identifying the content and remotely identifying the content of the file over the network.

5. A method according to any of claims 1 to 4, wherein said sending (310) the content attributes to every local computing device containing the file, may comprise;
identifying every local computing device containing the file using said database,
sending the content attributes to said identified local computing devices.

6. A method according to any of claims 1 to 5 wherein sending (310) the content attributes to said identified local computing devices comprises, for each of said identified local computing devices not connected to said network, creating an entry in a waiting list and sending the content attributes to said identified local computing devices in agreement with said entry on said waiting list when the local computing devices are reconnected to the network.

7. A method according to any of claims 1 to 6 wherein, requesting (304) a file that corresponds with said reference value from said network environment comprises, if no local computing device having said file that corresponds with said reference value is connected to the network, creating an entry in a waiting list and requesting a file that corresponds with said reference value from said local computing device in agreement with said entry when the local computing device is reconnected to said network.

8. A method according to any of claims 1 to 7, wherein said method furthermore comprises identifying whether the content attributes correspond with unwanted content and, if so, identifying the local computing device that first introduced said unwanted content in the network based on data stored in said database.

9. A computer program product comprising instructions which when executed by a network cause said network to carry out a method according to any
of claims 1 to
8

10. A machine readable data storage device storing the computer program product of claim 9.

11. A transmission signal conveying the computer program product of claim 9 over a local or wide area telecommunications network.

## Patentansprüche

1. Verfahren zum Ändern eines Systems zum Identifizieren des Inhalts einer Datei in einer Netzwerkumgebung, die Netzwerkumgebung umfassend Mittel zum Berechnen einer Einwegfunktion, mindestens eine lokale Berechnungsvorrichtung (50) und eine zentrale Infrastruktur (100), die zentrale Infrastruktur umfassend Mittel (120) zum Identifizieren von Inhalt in einer Datenbank (110), das Verfahren umfassend
- Ändern der Mittel zum Identifizieren des Inhalts,
- Abtasten (302) der Datenbank auf Referenzwerte, berechnet mit einer Einwegfunktion,
- für jeden der Referenzwerte:
- Anfordern (304) einer Datei, die mit dem Referenzwert korrespondiert, aus der Netzwerkumgebung,
- Identifizieren (306) des Inhalts der Datei unter Verwendung der Mittel zum Identifizieren von Inhalt und Bestimmen von Inhaltsattributen korrespondierend mit dem Inhalt der Datei und Speichern (308) einer Kopie der Inhaltsattribute in der Datenbank,
- Senden (310) der Inhaltsattribute an jede der mindestens einen Berechnungsvorrichtung, die die Datei enthält,
- nach dem Senden Auslösen (312) eines Vorgangs an jede der mindestens einen Berechnungsvorrichtung, die die Datei enthält, gemäß den Inhaltsattributen;
wobei die Datenbank eine Aufzeichnung für jeden mit der Einwegfunktion berechneten Referenzwert für in der mindestens einen Berechnungsvorrichtung gespeicherte Dateien umfasst.

2. Verfahren nach Anspruch 1, wobei das Abtasten (302) der Datenbank auf mit einer Einwegfunktion berechnete Referenzwerte Abtasten der Datenbank auf mit einer Einwegfunktion berechnete Referenzwerte umfasst, wobei die Referenzwerte nach einem im Voraus bestimmten Datum erzeugt werden.

3. Verfahren nach Anspruch 1 oder 2, wobei das Verfahren ferner umfasst, für jeden der Referenzwerte die Datei (306) an Mittel zum Identifizieren des Inhalts zu senden.

4. Verfahren nach Anspruch 1 oder 2, wobei das Verfahren ferner umfasst, für jeden der Referenzwerte die Datei mit den Mitteln zum Identifizieren des Inhalts zu teilen und den Inhalt der Datei über das Netzwerk aus der Ferne zu identifizieren.

5. Verfahren nach einem der Ansprüche 1 bis 4, wobei das Senden (310) der Inhaltsattribute an jede lokale Berechnungsvorrichtung, die die Datei enthält, Folgendes umfassen kann:
Identifizieren jeder lokalen Berechnungsvorrichtung, die die Datei enthält, unter Verwendung der Datenbank, Senden der Inhaltsattribute an die identifizierten lokalen Berechnungsvorrichtungen.

6. Verfahren nach einem der Ansprüche 1 bis 5, wobei Senden (310) der Inhaltsattribute an die identifizierten lokalen Berechnungsvorrichtungen umfasst, für jede der nicht mit dem Netzwerk verbundenen lokalen Berechnungsvorrichtungen einen Eintrag in einer Warteliste zu erzeugen und die Inhaltsattribute an die identifizierten lokalen Berechnungsvorrichtungen übereinstimmend mit dem Eintrag in der Warteliste zu senden, wenn die lokalen Berechnungsvorrichtungen mit dem Netzwerk erneut verbunden werden.

7. Verfahren nach einem der Ansprüche 1 bis 6, wobei Anfordern (304) einer Datei, die mit dem Referenzwert korrespondiert, von der Netzwerkumgebung umfasst, wenn keine lokale Berechnungsvorrichtung, die die Datei aufweist, die mit dem Referenzwert korrespondiert, mit dem Netzwerk verbunden ist, Erzeugen eines Eintrags in einer Warteliste und Anfordern einer Datei, die mit dem Referenzwert korrespondiert, von der lokalen Berechnungsvorrichtung übereinstimmend mit dem Eintrag, wenn die lokale Berechnungsvorrichtung mit dem Netzwerk erneut verbunden wird.

8. Verfahren nach einem der Ansprüche 1 bis 7, wobei das Verfahren ferner umfasst, zu identifizieren, ob die Inhaltsattribute mit unerwünschtem Inhalt korrespondieren, und falls ja, die lokale Berechnungsvorrichtung zu identifizieren, die den unerwünschten Inhalt zuerst in das Netzwerk einführte, basierend auf in der Datenbank gespeicherten Daten.

9. Computerprogrammprodukt, umfassend Anweisungen, die, wenn sie durch ein Netzwerk ausgeführt werden, bewirken, dass das Netzwerk ein Verfahren nach einem der Ansprüche 1 bis 8 ausführt.

10. Maschinenlesbare Datenspeichervorrichtung, die das Computerprogrammprodukt nach Anspruch 9 speichert.

11. Übertragungssignal, das das Computerprogrammprodukt nach Anspruch 9 über ein lokales oder Weitbereich-Telekommunikationsnetzwerk befördert.

## Revendications

1. Procédé de modification d'un système d'identification du contenu d'un fichier dans un environnement de réseau, ledit environnement de réseau comprenant des moyens de calcul d'une fonction univoque, au moins un dispositif informatique local (50) et une infrastructure centrale (100), ladite infrastructure centrale comprenant des moyens (120) d'identification de contenu dans une base de données (110), le procédé comprenant :
- la modification desdits moyens d'identification du contenu,
- l'exploration (302) de la base de données à la recherche de valeurs de référence calculées à l'aide d'une fonction univoque,
- pour chacune desdites valeurs de référence,
- la requête (304) d'un fichier correspondant à ladite valeur de référence auprès dudit environnement de réseau,
- l'identification (306) du contenu dudit fichier au moyen desdits moyens d'identification de contenu et détermination d'attributs de contenu correspondant au contenu du fichier et stockage (308) d'une copie desdits attributs de contenu dans la base de données,
- l'envoi (310) des attributs de contenu à chacun de l'au moins un dispositif informatique contenant le fichier,
- suite à l'envoi, le déclenchement (312) d'une action à chacun de l'au moins un dispositif informatique contenant le fichier conformément auxdits attributs de contenu ;
la base de données comprenant un enregistrement pour chaque valeur de référence calculée à l'aide de la fonction univoque pour des fichiers stockés dans l'au moins un dispositif informatique.

2. Procédé selon la revendication 1, dans lequel ladite exploration (302) de la base de données à la recherche de valeurs de référence calculées à l'aide d'une fonction univoque comprend l'exploration de la base de données à la recherche de valeurs de référence, calculées à l'aide d'une fonction univoque, lesdites valeurs de référence étant générées après une date prédéfinie.

3. Procédé selon la revendication 1 ou 2, lequel procédé comprend en outre, pour chacune desdites valeurs de référence, l'envoi du fichier (306) à des moyens d'identification du contenu.

4. Procédé selon la revendication 1 ou 2, lequel procédé comprend en outre, pour chacune desdites valeurs de référence, le partage du fichier avec les moyens d'identification du contenu et l'identification à distance du contenu du fichier par le biais du réseau.

5. Procédé selon l'une quelconque des revendications 1 à 4, dans lequel ledit envoi (310) des attributs de contenu à chaque dispositif informatique local contenant le fichier comprend éventuellement :
l'identification de chaque dispositif informatique local contenant le fichier au moyen de ladite base de données,
l'envoi des attributs de contenu auxdits dispositifs informatiques locaux identifiés.

6. Procédé selon l'une quelconque des revendications 1 à 5, dans lequel l'envoi (310) des attributs de contenu auxdits dispositifs informatiques locaux identifiés comprend, pour chacun desdits dispositifs informatiques locaux identifiés non connecté audit réseau, la création d'une entrée dans une liste d'attente et l'envoi des attributs de contenu auxdits dispositifs informatiques locaux identifiés en accord avec ladite entrée sur ladite liste d'attente lorsque les dispositifs informatiques locaux sont reconnectés au réseau.

7. Procédé selon l'une quelconque des revendications 1 à 6, dans lequel la requête (304) d'un fichier correspondant à ladite valeur de référence auprès dudit environnement de réseau comprend, si aucun dispositif informatique local détenant ledit fichier correspondant à ladite valeur de référence n'est connecté au réseau, la création d'une entrée dans une liste d'attente et la requête d'un fichier correspondant à ladite valeur de référence auprès dudit dispositif informatique local en accord avec ladite entrée lorsque le dispositif informatique local est reconnecté audit réseau.

8. Procédé selon l'une quelconque des revendications 1 à 7, lequel procédé comprend en outre l'identification si les attributs de contenu correspondent à un contenu indésirable et, le cas échéant, l'identification du dispositif informatique local ayant introduit en premier ledit contenu indésirable dans le réseau en fonction de données stockées dans ladite base de données.

9. Produit-programme d'ordinateur comprenant des instructions qui, une fois exécutées par un réseau, amènent ledit réseau à mettre en oeuvre un procédé selon l'une quelconque des revendications 1 à 8.

10. Dispositif de stockage de données lisible par machine, stockant le produit-programme d'ordinateur selon la revendication 9.

11. Signal de transmission véhiculant le produit-programme d'ordinateur selon la revendication 9 sur un réseau de télécommunication local ou étendu.
